(19) Europäisches Patentamt
European Patent Office
Office européen des brevets

(11) **EP 1 243 555 B1**

(12) **EUROPEAN PATENT SPECIFICATION**

(45) Date of publication and mention
of the grant of the patent:
**14.11.2007 Bulletin 2007/46**

(51) Int Cl.:
**C01G 23/07** (2006.01)   **C09C 1/36** (2006.01)

(21) Application number: **00962876.9**

(22) Date of filing: **27.09.2000**

(86) International application number:
**PCT/JP2000/006652**

(87) International publication number:
**WO 2001/023305 (05.04.2001 Gazette 2001/14)**

(54) **FINE PARTICULATE TITANIUM OXIDE AND METHOD FOR PRODUCING THE SAME**

FEINE TITANOXIDPARTIKEL UND VERFAHREN ZUR HERSTELLUNG DERSELBEN

OXYDE DE TITANE A PARTICULES FINES ET PROCEDE POUR LE PRODUIRE

(84) Designated Contracting States:
**AT BE CH CY DE DK ES FI FR GB GR IE IT LI LU MC NL PT SE**

(30) Priority: **27.09.1999  JP  27215999
15.09.2000  US  232852 P**

(43) Date of publication of application:
**25.09.2002  Bulletin 2002/39**

(73) Proprietor: **Showa Denko K.K.
Tokyo 105-8518 (JP)**

(72) Inventors:
• **TANAKA, Jun
Toyama-shi,
Toyama 931-8577 (JP)**

• **KAYAMA, Susumu
Toyama-shi,
Toyama 931-8577 (JP)**
• **YAMAYA, Hayato
Minato-ku,
Tokyo 105-8518 (JP)**

(74) Representative: **Strehl Schübel-Hopf & Partner
Maximilianstrasse 54
80538 München (DE)**

(56) References cited:
**EP-A- 0 826 633        EP-A- 1 231 186
DE-A- 1 667 839        JP-A- 6 340 423
JP-A- 10 251 021       US-A- 3 219 411
US-A- 5 508 015**

**Description**

TECHNICAL FIELD

The present invention relates to particulate titanium oxide produced by a vapor phase process, and a production process therefor.

BACKGROUND ART

Particulates, particularly ultrafine particulates of titanium oxide have very wide application areas in the industrial field and their diversified uses include ultraviolet light-shielding materials, additives to silicone rubber, photocatalysts and the like. The titanium oxide is referred to as "titanium dioxide" in Japanese Industrial Standard (JIS) but the term "titanium oxide" is used as a common name. Accordingly, this simple term "titanium oxide" is hereinafter used in the present invention. The importance of titanium oxide is increasing in the use for shielding ultraviolet light, for example, in the field of cosmetics, clothing and the like. As a shielding material, ultrafine particulates of titanium oxide are being used in many cases because of its high safety. For the shielding, two functions of absorbing and scattering the ultraviolet rays are necessary. The ultrafine particulates of titanium oxide have both of these functions.

Titanium oxide has three crystal forms, i.e., brookite, anatase, and rutile, the latter two of which are very important for industry. Because the band gap (corresponding to excitation energy) of rutile is lower than that of anatase (i.e., the optical absorption wavelength range is on the longer wavelength side than anatase), rutile has been considered to be preferable for ultraviolet light-shielding use. However, in actual ultraviolet light-shielding uses, a scattering effect depending on particle diameter, as well as absorption, has to be dealt with.

Recently, it has been reported that titanium oxide has a property of absorbing ultraviolet light at a wavelength of about 400 nm or less to excite the electrons in the outermost shell, allowing the generated electrons and holes to reach the surface of particulates, where they combine with oxygen or water to generate various radical species, thereby decomposing organic materials that exist near the surface of the particle. Therefore, in the case of using titanium oxide in cosmetics and the like, generally it has been widely attempted to practice surface treatment on the surface of particulate, particularly ultrafine particulate titanium oxide.

The fine particulates of titanium oxide are also used for making use of the photocatalytic reaction resulting from photoexcitation of titanium oxide. Furthermore, where titanium oxide is used for scattering ultraviolet light, ultrafine particulates of titanium oxide having a primary particle size of about 80 nm are used. Generally, the primary particle diameter of ultrafine particulates has not been defined. However, usually, those fine particulates having about 0.1 $\mu$m or less are referred to as ultrafine particles.

The production processes for titanium oxide are roughly divided into liquid phase processes where titanium tetrachloride or titanyl sulfate is hydrolyzed in a hydrophilic solvent and vapor phase processes where a volatile material such as titanium tetrachloride is vaporized and then the resulting vapor is reacted with an oxidizing gas such as oxygen and steam. In the vapor phase process, ultrafine particulate titanium oxide is obtained. However, only titanium oxide composed of anatase, as a main crystal form, has been obtained. Therefore, conventionally, ultrafine particulate titanium oxide of a rutile structure has been obtained by a liquid phase process. EP 0 826 633 A1 discloses a liquid phase process for producing titanium oxide.

In general, the powder of titanium oxide produced by the liquid phase process disadvantageously undergoes heavy aggregation. For this reason, when titanium oxide is used in cosmetics and the like, the titanium oxide must be strongly cracked or pulverized, so that there arise problems such as mingling of abraded materials attributable to the pulverization treatment or the like, non-uniform distribution of the particle size, or a poor feeling.

Several production processes for titanium oxide having high rutile contents have heretofore been proposed. For example, Japanese Unexamined Patent Publication (Kokai) No. 3-252315 discloses a production process where the ratio of hydrogen in the mixed gas comprising oxygen and hydrogen in the vapor phase reaction is changed to adjust the ratio of the rutile content and a process for producing high purity titanium oxide having a rutile content of 99% or more by adjusting the concentration of hydrogen to from 15 to 17% by volume. Also, Japanese Unexamined Patent Publication (Kokai) No. 6-340423 discloses a production process for titanium oxide having high rutile content (the rutile content being from 85% by weight to 90% by weight) where the production is performed by setting the molar ratio of titanium tetrachloride, hydrogen and oxygen in the mixed gas to specified mixing ratios.

EP 1 123 186, published after the priority date of the present invention, discloses a production process for a titanium oxide and the obtained titanium oxide, which are excluded from the present invention.

DE 1 667 839 A discloses a process for the production of titanium oxide particles having a rutile content of 70-90% and a BET specific surface area of 31 $m^2$/g.

JP 10-10251021 A discloses a process for producing titanium oxide powder having a low chlorine content, comprising oxidizing titanium tetrachloride with oxygen, steam or the gaseous mixture at high temperatures and dechlorinating the powder.

In the case of titanium oxide produced by the vapor phase process, the same problems as in the production by the liquid phase process will arise. That is, although particulates, particularly ultrafine particulates of titanium oxide may be obtained by the conventional vapor phase process, only particulates of titanium oxide which have undergone grain growth can be obtained. Thus, for obtaining ultrafine particulates of titanium oxide, the titanium oxide must be strongly cracked or pulverized. Moreover, in titanium oxide having high rutile content, the ultrafine particulates, although called ultrafine particulates, do not have sufficient specific surface area and are insufficient in dispersibility, a quality which is desired in various uses such as cosmetics.

SUMMARY OF THE INVENTION

The present invention has been made to solve the above-described problems and an object of the present invention is to provide particulates, particularly ultrafine particulates, of titanium oxide having a high rutile content which undergo considerably reduced aggregation and are highly dispersible.

Another object of the present invention is to provide a production process for producing particulates, particularly ultrafine particulates, of titanium oxide having a high rutile-content.

The present inventors have made extensive investigations with view to solving the above-described problems. As a result, they have found that particulates, particularly ultrafine particulate titanium oxide with a high rutile content having specified properties, which is titanium oxide having a high rutile content and a high BET specific surface area, can be obtained by a vapor phase process comprising preheating a diluted titanium tetrachloride gas, in which titanium tetrachloride is diluted with an inert gas, and an oxidizing gas, respectively, supplying them at specified flow rates into a reaction tube, and allowing them to react with each other for a specified time of residence at high temperatures. Thus, the present invention has been accomplished.

That is, the present invention relates to the subject-matter defined in the claims.

BRIEF DESCRIPTION OF THE INVENTION

Fig. 1 is a diagram showing the range of property of the ultrafine particulate, rutile-containing titanium oxide of the present invention in respect of rutile content vs. BET specific surface area of the ultrafine particulate titanium oxide.
Fig. 2 is a schematic diagram showing a reaction tube having a coaxial parallel flow nozzle used in the Examples.

BEST MODE OF CARRYING OUT THE INVENTION

According to the present invention, in respect of the mixed crystal titanium oxide containing rutile crystals (abbreviated as rutile-containing titanium oxide) obtained by a vapor phase process using titanium tetrachloride as a starting material, the rutile-containing titanium oxide has a property represented by the following general formula (1):

$$R \geq 1,300 \times B^{-0.95} \qquad\qquad (1)$$

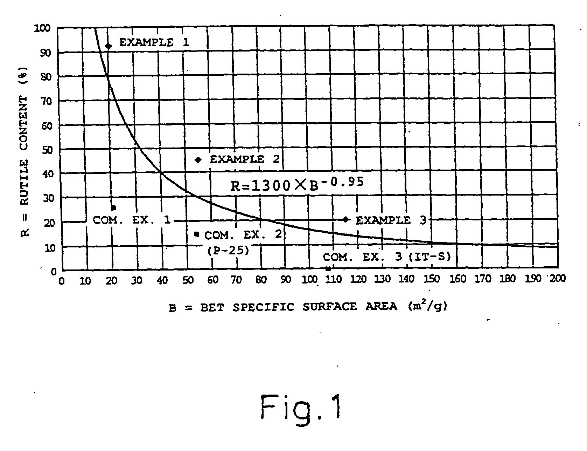

wherein R represents a rutile content (%) measured by an X-ray diffraction method and B represents a BET specific surface area ($m^2/g$), which ranges from 15 to 200 $m^2/g$, wherein the titanum oxide has a diameter corresponding to 90% of the particle size cumulative distribution on a weight basis as termed D90 measured by a laser diffraction-type particle size distribution measuring method of 2.5 $\mu m$ or less. That is, the particulate, particularly ultrafine particulate rutile-containing titanium oxide of the present invention, is rutile-containing titanium oxide that satisfies the condition of the above general formula (1) in Fig. 1. The known particulate, particularly ultrafine particulate titanium oxides, though they are rutile-containing titanium oxides, have properties plotted in the region below the curve $R=1,300 \times B^{-0.95}$ in the relationship between the rutile content (%) and BET specific surface area.

The rutile-containing titanium oxide of the present invention satisfies the property of the general formula (1) and is a particulate, particularly an ultrafine particulate, and has as a feature a BET specific surface area in the range of from 15 to 200 $m^2/g$, preferably from 40 to 200 $m^2/g$.

Furthermore, the particulate rutile-containing titanium oxide of the present invention preferably has a small particle diameter and a sharp particle size distribution. In the present invention, a laser diffraction-type particle size distribution measuring method is adopted as an index of dispersibility, and the particle size distributions were measured. The procedures for measuring particle size distributions will be described below.

To a slurry obtained by adding 50 ml of pure water and 100 $\mu$l of a 10% aqueous sodium hexametaphosphate solution to 0.05 g of titanium oxide, ultrasound (46 KHz, 65 W) is applied for 3 minutes. Then, this slurry is measured for its particle size by a laser diffraction-type particle size analyzer (SALD-2000J, manufactured by Shimadzu Corporation). It can be said that when the thus-measured D90 diameter (i.e., a size corresponding to 90% of the particle size cumulative distribution on a weight basis) is small, good dispersibility in a hydrophilic solvent is attained.

The particulates of titanium oxide of the present invention have excellent uniformity in particle size distribution. In the present invention, the uniformity in particle size distribution is specified by a distribution constant (n) obtained using the Rosin-Rammler formula. The Rosin-Rammler formula is briefly described below. Details thereof are described in Ceramic Kogaku Handbook (Ceramic Engineering Handbook), compiled by Nippon Ceramics Kyokai, 1st ed., pages 596 to 598 (1989).

The Rosin-Rammler formula is represented by the following formula (2):

$$R = 100\exp(-bD^n) \qquad (2)$$

wherein D is a particle size, R is a percentage of the number of particles larger than D to the total number of particles, and n is a distribution constant.

Assuming that $b = 1/De^n$, the formula (2) is rewritten as follows:

$$R = 100\exp\{-(D/De)^n\} \qquad (3)$$

wherein De is an absolute size constant and n is a distribution constant. The constant b in the formula (2) is a constant derived from the particle size characteristic number, De, i.e., the particle diameter corresponding to an over particle diameter (also called "plus sieve" or "oversize") of 36.8% (R=1/e=0.368), and the distribution constant, n, according to the above formula: $b=1/De^n$.

From formula (2) or (3), the following formula (4) is obtained:

$$\log\{\log(100/R)\} = n\log D + C \qquad (4)$$

wherein C is a constant. From the formula (4), the relationship between logD and log{log(100/R)} is plotted on the Rosin-Rammler (RR) chart where logD is graduated on the x axis and log{log(100/R)} is graduated on the y axis. Then, a nearly straight line is obtained. The gradient (n) of this straight line indicates the degree of uniformity of the particle size. It can be said that when the numerical value of n becomes larger, the uniformity of particle size distribution becomes more excellent.

The particulates of titanium oxide of the present invention have a size corresponding to 90% of the particle size cumulative distribution on a weight basis as termed D90 diameter, of 2.5 $\mu$m or less and preferably a distribution constant n by the Rosin-Rammler formula of 1.5 or more.

The particulates of titanium oxide of the present invention may be contained as a pigment or a particle component, having a photocatalytic effect, in various compositions. More specifically, the ultrafine particulates of titanium oxide of the present invention may be used as an additive in various products such as cosmetics, clothes, ultraviolet light-shielding materials and as an additive to silicone rubber.

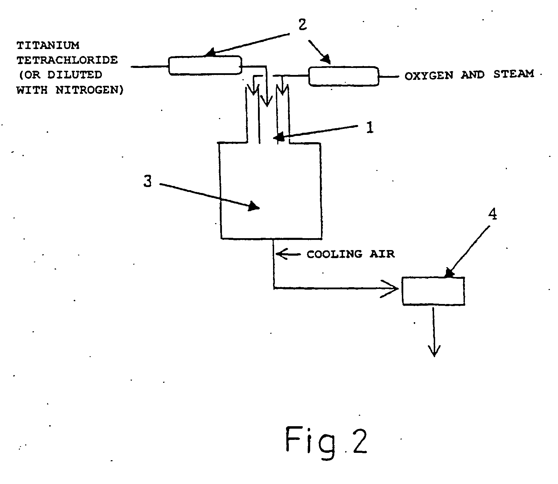

Next, referring to the attached drawings, the production process for producing particulate titanium oxide of the present invention will be described below. Fig. 2 is a schematic diagram showing a reaction tube having a coaxial parallel flow nozzle used in the production process for producing particulate titanium oxide of the present invention by a vapor phase process. A gas containing titanium tetrachloride is preheated in a preheater 2 to a predetermined temperature and introduced into a reaction tube 3 through an inner tube of a coaxial parallel flow nozzle portion 1. In the present invention, the temperatures of respective preheaters 2 may be different from each other. An oxidizing gas is preheated in a preheater 2 and introduced into the reaction tube 3 through an outer tube of the coaxial parallel nozzle portion 1. The gases introduced into the reaction tube are mixed, allowed to react, rapidly cooled with a cooling gas, and then fed to a bag filter 4 where the resulting particulates of titanium oxide are collected.

In a general production process of titanium oxide, by a vapor phase process, titanium tetrachloride is oxidized using an oxidizing gas such as oxygen or steam under the reaction condition of 1,000°C or more to thereby obtain particulates of titanium oxide.

The growth mechanism of particulate in the vapor phase process is roughly classified into two types. One is CVD (chemical vapor deposition) and another is the growth by collision (coalescence) and sintering of particles. Each growth time (growth zone) of these two growths must be short to obtain particulates, particularly ultrafine particulates of titanium oxide as aimed at by the present invention. More specifically, in the former growth, the growth may be prevented by, for example, elevating the preheating temperature to thereby increase the chemical reactivity (reaction rate). In the latter growth, cooling, dilution or the like is swiftly applied to the particulates after the completion of CVD to thereby reduce the time of residence at high temperatures as much as possible, so that the growth by sintering and the like can be prevented.

On the other hand, when it is attempted to obtain particulates with high rutile contents, the time of residence at high temperatures must be sufficiently long in order to promote the thermal conversion of anatase to rutile. This is inconsistent with the above-described production conditions for particulates, particularly ultrafine particulates. Therefore, conventionally, particulates, particularly ultrafine particulates obtained by a vapor phase process are composed mainly of anatase or are amorphous.

The present invention relates to a vapor phase process for producing titanium oxide by oxidizing a diluted titanium tetrachloride gas, which has been diluted with an inert gas to 10% by volume or more to 90% by volume or less of titanium chloride, with an oxidizing gas at a high temperature, and includes supplying the diluted titanium tetrachloride gas and the oxidizing gas each preheated to 1000°C or more into a reaction tube each at a velocity of 20 m/sec or more and allowing them to react at an average residence time of 3 seconds or less above 700°C to obtain particulates, particularly ultrafine particulate, titanium oxide having a high rutile content in the relationship of BET specific surface area vs. rutile content.

In the present invention, the concentration of titanium tetrachloride in the diluted titanium tetrachloride gas is from 10 to 90% by volume, more preferably from 20 to 80% by volume. If the concentration of titanium tetrachloride is 10% by volume or less, the reactivity is low and the rutile content is not increased. On the other hand, if the concentration of titanium tetrachloride is 90% by volume or more, the collision/sintering of particles is promoted so that a desired particulate, particularly ultrafine particulate titanium oxide cannot be obtained.

The gas for diluting the titanium tetrachloride must be selected from those that do not react with titanium tetrachloride and are not oxidized thereby. Specific examples thereof include nitrogen and argon.

The preheating temperatures for the diluted titanium tetrachloride gas and oxidizing gas, which temperatures may be the same or different, are each 1,000°C or more and most preferably about 1,100°C. Although a smaller difference in the temperatures of the gases is more preferable, if the preheating temperature is lower than 1000°C, the reactivity near the nozzle is low so that the rutile content is not increased.

The diluted titanium tetrachloride gas and the oxidizing gas are introduced into a reaction tube each at a velocity of 20 m/sec or more, more preferably 30 m/sec or more and most preferably 50 m/sec or more. By increasing the velocity, mixing of the two gases is accelerated. If the introduction temperature is 900°C or more, the reaction is completed at the same time as the mixing, so that the generation of uniform nuclei can be increased and the reaction zone (zone where CVD-governed, grown particles are formed) can be made smaller. If the velocity is less than 20 m/sec, the mixing occurs insufficiently, thus failing to give desired particulates, particularly ultrafine particulates. As the inlet nozzle, those nozzles are adopted that give a coaxial parallel flow, an oblique flow or a cross flow.

It is preferred that the preheated titanium tetrachloride-containing gas and the preheated oxidizing gas be supplied into the reaction tube to generate turbulence in the reaction tube. Also, it is preferred that the titanium tetrachloride-containing gas and the oxidizing gas be supplied into the reaction tube through a coaxial parallel flow nozzle and that the inner diameter of the inner tube of the coaxial parallel flow nozzle be 50 mm or less.

On the other hand, when the material gases are introduced into the reaction tube and the reaction is allowed to proceed, there exists a reaction zone (region) where the reaction temperature exceeds 1,000°C because the reaction is an exothermic reaction. Although the heat is more or less released from the reactor, the particulates of titanium oxide will grow quickly unless rapid cooling is practiced. Accordingly, in the present invention, the time of residence at high temperatures above 700°C to is set to 3 seconds or less, preferably 1 second or less and more preferably 0.5 second or less and then performing rapid cooling. The time of residence at high temperatures exceeding 3 seconds is not preferable as sintering of the particles will proceed.

As means for rapid cooling the titanium oxide particulates after the reaction, for example, a method of introducing a large amount of gas such as cooled air or nitrogen or a method of spraying water may be adopted.

The particulates, particularly ultrafine particulate titanium oxide of the present invention has a sharp particle size distribution and is excellent in dispersibility in aqueous solvents so that it advantageously finds application in shielding ultraviolet light in the field of cosmetics, clothes and the like. Therefore, the particulate titanium oxide of the present invention may be mixed with conventional carriers, additives and the like that are known in these fields to give rise to compositions for use in shielding ultraviolet light.

EXAMPLES

Hereinafter, the present invention will be described concretely by examples. However, the present invention should not be construed as being limited thereto.

Example 1

A diluted titanium tetrachloride gas obtained by diluting 11.8 $Nm^3$/hr (N means normal state, hereinafter the same) of gaseous titanium tetrachloride with 4 $Nm^3$/hr of nitrogen gas was preheated to 1,100°C. An oxidizing gas obtained by mixing 8 $Nm^3$/hr of oxygen and 20 $Nm^3$/hr of steam was preheated to 1,000°C. These material gases were introduced using the reaction apparatus shown in Fig. 2 into a quartz glass reactor through a coaxial parallel flow nozzle at velocities of 40 m/sec and 30 m/sec, respectively. After introducing cooling air into the reaction tube so that the time of residence at high temperatures above 700°C was 0.3 second, the ultrafine particulates of titanium oxide were collected using a Teflon™-made bag filter.

The obtained particulates of titanium oxide had a BET specific surface area of 20 $m^2$/g and a ratio of rutile contained (also called rutile content) of 92%. The BET specific surface area was measured by a specific surface area measuring device (machine type was Flow SorbII, 2300) produced by Shimadzu Corporation contained was a ratio (= $100 \times Sr/(Sr+Sa)$) calculated from a peak area corresponding to rutile type crystal (abbreviated as Sr) and a peak area corresponding to anatase type crystal (abbreviated as Sa) in X-ray diffraction. The above-described rutile content was a value by far greater than the value calculated by introducing the value of specific area of 20 $m^2$/g into the general formula (1).

On the particle size distribution of the powder of titanium oxide obtained, a diameter corresponding to 90% of the particle size cumulative distribution on a weight basis as termed D90 was measured by a laser diffraction-type particle size distribution measuring method. As a result, D90 was 1.2 $\mu$m and the n value according to the Rosin-Rammler formula was 2.3.

The n value was obtained by plotting three-point data D10, D50 and D90 obtained in the laser diffraction on the RR chart as R = 90%, 50% and 10%, respectively, and determined from an approximate straight line drawn on these 3 points.

Example 2

A diluted titanium tetrachloride gas, obtained by diluting 8.3 $Nm^3$/hr of gaseous titanium tetrachloride with 6 $Nm^3$/hr of nitrogen gas, was preheated to 1,100°C. An oxidizing gas, obtained by mixing 4 $Nm^3$/hr of oxygen and 15 $Nm^3$/hr of steam, was preheated to 1,100°C. These material gases were introduced into a quartz glass reactor using the reaction apparatus shown in Fig. 2 through a coaxial parallel flow nozzle at velocities of 35 m/sec and 50 m/sec, respectively. After introducing cooling air into the reaction tube so that the time of residence at high temperatures above 700°C was 0.2 second, the resulting particulates of titanium oxide were collected using a Teflon™-made bag filter.

The obtained particulate titanium oxide had a BET specific surface area of 55 $m^2$/g and a rutile content of 45%. The rutile content was a value by far greater than the value calculated by substituting the general formula (1) with a specific area of 55 $m^2$/g. The powder had a diameter corresponding to 90% of the particle size cumulative distribution on a weight basis as termed D90 of 1.4 $\mu$m according to the particle size distribution measured by a laser diffraction type particle size distribution measuring method. The n value in Rosin-Rammler formula was 2.0.

Example 3

A diluted titanium tetrachloride gas obtained by diluting 4.7 $Nm^3$/hr of gaseous titanium tetrachloride with 16 $Nm^3$/hr of nitrogen gas was preheated to 1,100°C. An oxidizing gas obtained by mixing 20 $Nm^3$/hr of air and 25 $Nm^3$/hr of steam was preheated to 1,000°C. These material gases were introduced into a quartz glass reactor using the reaction apparatus shown in Fig. 2 through a coaxial parallel flow nozzle at velocities of 45 m/sec and 60 m/sec, respectively. After introducing cooling air into the reaction tube so that the time of residence at high temperatures above 700°C could be 0.2 second, the ultrafine particulates of titanium oxide were collected using a Teflon™-made bag filter.

The obtained titanium oxide had a BET specific surface area of 115 $m^2$/g and a rutile content of 20%. The rutile content was a value by far greater than the value calculated by introducing the value of the specific surface area of 115 $m^2$/g into the general formula (1). The powder had a diameter corresponding to 90% of the particle size cumulative distribution on a weight basis as termed D90 of 2.1 $\mu$m according to the particle size distribution measured by a laser diffraction type particle size distribution measuring method. The n value in Rosin-Rammler formula was 1.8.

Comparative Example 1

A diluted titanium tetrachloride gas obtained by diluting 8.3 Nm$^3$/hr of gaseous titanium tetrachloride with 6 Nm$^3$/hr of nitrogen gas was preheated to 800°C. An oxidizing gas obtained by mixing 4 Nm$^3$/hr of oxygen and 15 Nm$^3$/hr of steam was preheated to 900°C. These material gases were introduced into a quartz glass reactor using the reaction apparatus shown in Fig. 2 through a coaxial parallel flow nozzle at velocities of 35 m/sec and 50 m/sec, respectively. After introducing cooling air into the reaction tube so that the time of residence at high temperatures above 700°C was 0.3 second, the particulates of titanium oxide were collected using a Teflon-made bag filter.

The obtained particulates of titanium oxide had a BET specific surface area of 21 m$^2$/g and a rutile content of 26%. The rutile content was a value by far smaller than the value calculated by introducing the value of the specific surface area of 21 m$^2$/g into the general formula (1). The powder had a diameter corresponding to 90% of the particle size cumulative distribution on a weight basis as termed D90 of 2.9 μm according to the particle size distribution measured by a laser diffraction-type particle size distribution measuring method. The n value in Rosin-Rammler formula was 1.8.

Comparative Example 2

Analysis of ultrafine particulate titanium oxide P-25, produced by Nippon Aerosil Co., Ltd., revealed that it had a specific surface area of 54 m$^2$/g and a rutile content of 15%. The rutile content was a value smaller than the value calculated by incorporating the value of the specific surface area of 54 m$^2$/g into the general formula (1). The powder had a diameter corresponding to 90% of the particle size cumulative distribution on a weight basis as termed D90 of 3.1 μm according to the particle size distribution measured by a laser diffraction type particle size distribution measuring method. The n value in Rosin-Rammler formula was 1.4.

Analysis of ultrafine particulate titanium oxide ITS, produced by Idemitsu Kosan Co., Ltd., revealed that it had a specific surface area of 108 m$^2$/g and a rutile content of 0% (amorphous). The value that was calculated by introducing the value of the specific surface area of 108 m$^2$/g into the general formula (1) was 16%. The particle size distribution of the powder was measured by a laser diffraction-type particle size distribution measuring method and its a diameter corresponding to 90% of the particle size cumulative distribution on a weight basis as termed D90 revealed to be 6.3 μm. The n value in Rosin-Rammler formula was 1.8.

INDUSTRIAL APPLICABILITY

The particulates, particularly ultrafine particulate titanium oxide, satisfy the conditions of the above-described general formula (1) in the correlation of BET specific surface area (B) vs. rutile content (R). Also, the particulate rutile-containing titanium oxide obtained by the production method of the present invention has a rutile content much higher than other titanium oxides having equivalent BET specific surface areas and is particularly excellent in dispersibility.

Further, the ultrafine particulate titanium oxide having such a property is one having a diameter corresponding to 90% of the particle size cumulative distribution on a weight basis as termed D90 measured by a laser diffraction-type particle size measuring method of 2.5 μm or less and, more preferably, is one having a distribution constant n according to the Rosin-Rammler formula of 1.5 or more.

The titanium oxide having properies according to the present invention is suitable for ultraviolet light-shielding use in the field of cosmetics and clothing and the like. In particular, it has a sharp particle size distribution and is excellent in dispersibility in aqueous solvents so that cracking process or the like is unnecessary or may require only a very small-scale installation. Thus, it has a very great practical value in industry.

The invention may be embodied in other specific forms without departing from the scope of the claims.

**Claims**

**1.** Particulate titanium oxide comprising a mixed crystal titanium oxide containing rutile crystal produced by a vapor phase process, wherein the titanium oxide has a property represented by the following general formula

$$R \geq 1,300 \times B^{-0.95}$$

wherein R represents a rutile content (%) measured by an X-ray diffraction method and B represents a BET specific surface area (m$^2$/g), which ranges from 15 to 200 m$^2$/g, wherein the titanum oxide has a diameter corresponding to 90% of the particle size cumulative distribution on a weight basis as termed D90 measured by a laser diffraction-

type particle size distribution measuring method of 2.5 μm or less, obtainable by a process comprising:

subjecting a titanium tetrachloride diluted gas, obtained by diluting titanium tetrachloride to from 10% by volume or more to 90% by volume or less with an inert gas, to high temperature oxidation with an oxidizing gas containing oxygen or steam, or both, wherein the titanium tetrachloride diluted gas and the oxidizing gas, each preheated to 1000°C or more, are supplied into reaction tube each at a velocity of 20 m/sec or more and allowed to react for a time of residence at high temperatures above 700°C of 3 seconds or less,
provided the following embodiment is excluded:

a particulate titanium oxide, obtained by a process, wherein a titanium tetrachloride-containing gas obtained by mixing 4.7 $Nm^3$/hr of gaseous titanium tetrachloride and 16 $Nm^3$/hr of nitrogen and an oxidizing gas obtained by mixing 20 $Nm^3$/hr of air and 25 $Nm^3$/hr of steam were each preheated to 1,100°C and 1,000°C, respectively, and then introduced into a reaction tube at flow rates of 92 m/sec and 97 m/sec, respectively, through a coaxial parallel flow nozzle, wherein the coaxial parallel flow nozzle had an inner tube diameter of 20 mm and the titanium tetrachloride-containing gas was introduced through the inner tube, wherein the reaction tube had an inside diameter of 100 mm and the flow rate within the reaction tube at a reaction temperature of 1,250°C was 13 m/sec as a calculated value, and wherein after the reaction, cooling air was introduced into the reaction tube so that the high-temperature residence time in the reaction tube would be 0.2 second or less.

2. The particulate titanium oxide as claimed in claim 1, wherein the BET specific surface area represented by B is 40 to 200 $m^2$/g.

3. The particulate titanium oxide as claimed in claim 1 or 2, wherein the titanium oxide has a distribution constant n according to Rosin-Rammler formula of 1.5 or more.

4. A production process for producing particulate titanium oxide, comprising a mixed crystal titanium oxide containing rutile crystal, wherein the titanium oxide has a property represented by the following general formula

$$R \geq 1{,}300 \times B^{-0.95}$$

wherein R represents a rutile content (%) measured by an X-ray diffraction method and B represents a BET specific surface area ($m^2$/g), which ranges from 15 to 200 $m^2$/g, the process comprising subjecting a titanium tetrachloride diluted gas obtained by diluting titanium tetrachloride to from 10% by volume or more to 90% by volume or less with an inert gas, to high temperature oxidation with an oxidizing gas containing oxygen or steam, or both, wherein the titanium tetrachloride diluted gas and the oxidizing gas, each preheated to 1000°C or more, are supplied into reaction tube each at a velocity of 20 m/sec or more and allowed to react for a time of residence at high temperatures above 700°C of 3 seconds or less,
provided the following embodiment is excluded:

a titanium tetrachloride-containing gas obtained by mixing 4.7 $Nm^3$/hr of gaseous titanium tetrachloride and 16 $Nm^3$/hr of nitrogen and an oxidizing gas obtained by mixing 20 $Nm^3$/hr of air and 25 $Nm^3$/hr of steam were each preheated to 1,100°C and 1,000°C, respectively, and then introduced into a reaction tube at flow rates of 92 m/sec and 97 m/sec, respectively, through a coaxial parallel flow nozzle, wherein the coaxial parallel flow nozzle had an inner tube diameter of 20 mm and the titanium tetrachloride-containing gas was introduced through the inner tube, wherein the reaction tube had an inside diameter of 100 mm and the flow rate within the reaction tube at a reaction temperature of 1,250°C was 13 m/sec as a calculated value, and wherein after the reaction, cooling air was introduced into the reaction tube so that the high-temperature residence time in the reaction tube would be 0.2 second or less.

5. The process according to claim 4, wherein use is made of a titanium tetrachloride diluted gas obtained by diluting titanium tetrachloride to 20% by volume or more and 80% by volume or less with an inert gas.

6. The production process for particulate titanium oxide as claimed in any one of claims 4 or 5, wherein the titanium tetrachloride diluted gas and oxidizing gas are supplied to the reaction tube through a coaxial parallel flow nozzle having an inner tube, the inner tube having an inner diameter of 50 mm or less.

7. A process according to any one of claims 4 to 6, wherein the time of residence at high temperatures above 700°C is 1 second or less, more preferably 0.5 seconds or less.

**Patentansprüche**

1. Teilchenförmiges Titanoxid, umfassend ein Rutilkristalle enthaltendes Mischkristalltitanoxid, hergestellt mittels eines Gasphasenverfahrens, wobei das Titanoxid eine durch die folgende allgemeine Formel dargestellt Eigenschaft aufweist

$$R \geq 1300 \times B^{-0,95}$$

wobei R einen mittels eines Röntgenbeugungsverfahrens gemessenen Rutilgehalt (%) darstellt, und B einen spezifischen Oberflächenbereich nach BET (m$^2$/g), der von 15 bis 200 m$^2$/g reicht, darstellt, wobei das Titanoxid einen Durchmesser, welcher 90 % der kumulativen Teilchengrößenverteilung entspricht, was als D90 bezeichnet wird, wobei mittels eines Teilchengrößenverteilungsmessverfahrens vom Laserbeugungstyp gemessen wird, von 2,5 μm oder weniger aufweist, welches durch ein Verfahren erhältlich ist, umfassend:

Unterziehen eines verdünnten Titantetrachloridgases, erhalten durch Verdünnen von Titantetrachlorid auf 10 Vol.-% oder mehr bis 90 Vol.-% oder weniger mit einem Inertgas, einer Hochtemperaturoxidation mit einem oxidierenden Gas, welches Sauerstoff oder Dampf oder beides enthält, wobei das verdünnte Titantetrachloridgas und das oxidierende Gas, die jeweils auf 1000 °C oder mehr vorgeheizt sind, mit einer Geschwindigkeit von 20 m/s oder mehr in das Reaktionsrohr eingeführt werden und für eine Verweilzeit bei hohen Temperaturen von über 700 °C von 3 Sekunden oder weniger reagieren gelassen werden,
mit der Maßgabe dass folgende Ausführungsform ausgenommen ist:

ein teilchenförmiges Titanoxid, erhalten durch ein Verfahren, bei dem ein Titantetrachlorid-enthaltendes Gas, das durch Mischen von 4,7 Nm$^3$/h gasförmigem Titantetrachlorid und 16 Nm$^3$/h Stickstoff erhalten wurde, und ein oxidierendes Gas, erhalten durch Mischen von 20 Nm$^3$/h Luft und 25 Nm$^3$/h Dampf, jeweils auf 1100°C und 1000 °C vorgeheizt wurden, und dann mit Strömungsgeschwindigkeiten von 92 m/s und 97 m/s durch eine koaxiale Gleichstromdüse in ein Reaktionsrohr eingeführt wurden, wobei die koaxiale Gleichstromdüse einen Innenrohrdurchmesser von 20 mm aufwies und das Titantetrachlorid-enthaltende Gas durch das Innenrohr eingeführt wurde, wobei das Reaktionsrohr einen Innendurchmesser von 100 mm aufwies und die Strömungsgeschwindigkeit innerhalb des Reaktionsrohrs bei einer Temperatur von 1250°C 13 m/s als berechneter Wert betrug, und wobei nach der Reaktion Kühlungsluft in das Reaktionsrohr derart eingeführt wurde, dass die Hochtemperaturverweilzeit in dem Reaktionsrohr 0,2 Sekunden oder weniger beträgt.

2. Teilchenförmiges Titanoxid nach Anspruch 1, wobei der durch B dargestellte spezifische Oberflächenbereich nach BET 40 bis 200 m$^2$/g beträgt.

3. Teilchenförmiges Titanoxid nach Anspruch 1 oder 2, wobei das Titanoxid eine Verteilungskonstante n gemäß der Rosin-Rammler-Formel von 1,5 mehr aufweist.

4. Herstellungsverfahren zur Herstellung von teilchenförmigem Titanoxid, umfassend ein Rutilkristall-enthaltendes Mischkristalltitanoxid, wobei das Titanoxid eine durch die folgende allgemeine Formel dargestellte Eigenschaft

$$R \geq 1300 \times B^{-0,95}$$

aufweist, wobei R einen Rutilgehalt (%) darstellt, gemessen mittels eines Röntgenbeugungsverfahrens, und B einen spezifischen Oberflächenbereich nach BET (m$^2$/g) darstellt, der von 15 bis 200 m$^2$/g reicht, wobei das Verfahren das Unterziehen eines verdünnten Titantetrachloridgases, erhalten durch Verdünnen von Titantetrachlorid auf 10 Vol.-% oder mehr bis 90 Vol.-% mit einem Inertgas, einer Hochtemperaturoxidation mit einem Sauerstoff oder Dampf oder beides enthaltenden oxidierenden Gas umfasst, wobei das verdünnte Titantetrachloridgas und das oxidierende Gas, die jeweils auf 1000 °C oder mehr vorgeheizt sind, mit einer Geschwindigkeit von 20 m/s oder mehr in das Reaktionsrohr geführt werden und für eine Verweilzeit bei hohen Temperaturen von über 700 °C von 3 Sekunden oder weniger reagieren gelassen werden,

mit der Maßgabe, dass folgende Ausführungsform ausgenommen ist:

ein Titantetrachlorid-enthaltendes Gas, das durch Mischen von 4,7 Nm$^3$/h gasförmigem Titantetrachlorid und 16 Nm$^3$/h Stickstoff erhalten wurde, und ein oxidierendes Gas, erhalten durch Mischen von 20 Nm$^3$/h Luft und 25 Nm$^3$/h Dampf, wurden jeweils auf 1100°C und 1000 °C vorgeheizt und dann mit Strömungsgeschwindigkeiten von 92 m/s und 97 m/s durch eine koaxiale Gleichstromdüse in ein Reaktionsrohr eingeführt, wobei die koaxiale Gleichstromdüse einen Innenrohrdurchmesser von 20 mm aufwies, und das Titantetrachlorid-enthaltende Gas durch das Innenrohr eingeführt wurde, wobei das Reaktionsrohr einen Innendurchmesser von 100 mm aufwies und die Strömungsgeschwindigkeit innerhalb des Reaktionsrohrs bei einer Temperatur von 1250°C 13 m/s als berechneter Wert betrug, und wobei nach der Reaktion Kühlungsluft in das Reaktionsrohr derart eingeführt, dass die Hochtemperaturverweilzeit in dem Reaktionsrohr 0,2 Sekunden oder weniger beträgt.

5. Verfahren nach Anspruch 4, wobei ein verdünntes Titantetrachloridgas verwendet wird, das durch Verdünnen von Titantetrachlorid auf 20 Vol.-% oder mehr und 80 Vol.-% oder weniger mit einem Inertgas erhalten wird.

6. Herstellungsverfahren für teilchenförmiges Titanoxid nach einem der Ansprüche 4 oder 5, wobei das verdünnte Titantetrachloridgas und das oxidierende Gas dem Reaktionsrohr durch eine koaxiale Gleichstromdüse mit einem Innenrohr zugeführt wird, wobei das Innenrohr einen Innendurchmesser von 50 mm oder weniger aufweist.

7. Verfahren nach einem der Ansprüche 4 bis 6, wobei die Verweilzeit bei hohen Temperaturen von über 700 °C 1 Sekunde oder weniger beträgt, bevorzugter 0,5 Sekunden oder weniger.

## Revendications

1. Oxyde de titane sous forme de particules comprenant un oxyde de titane sous forme de cristal mélangé contenant un cristal de rutile produit par un procédé en phase vapeur, ledit oxyde de titane ayant une propriété représentée par la formule générale suivante

$$R \geq 1\ 300 \times B^{-0,95}$$

dans laquelle R représente la teneur en rutile (%) mesurée par une méthode de diffraction des rayons X et B représente la surface spécifique BET (m$^2$/g), laquelle va de 15 à 200 m$^2$/g, ledit oxyde de titane ayant un diamètre correspondant à 90 % de la distribution cumulée de la taille des particules sur une base en poids appelé D90 mesuré par une méthode de mesure de la distribution de la taille des particules de type par diffraction laser inférieur ou égal à 2,5 $\mu$m, lequel peut être obtenu par un procédé comprenant :

de soumettre un gaz dilué de tétrachlorure de titane, obtenu en diluant du tétrachlorure de titane à une teneur supérieure ou égale à 10 % en volume et inférieure ou égale à 90 % en volume avec un gaz inerte, à une oxydation à haute température avec un gaz oxydant contenant de l'oxygène ou de la vapeur, ou les deux, dans lequel on introduit le gaz dilué de tétrachlorure de titane et le gaz oxydant, chacun préchauffé à une température supérieure ou égale à 1000°C, dans un tube de réaction chacun à une vitesse supérieure ou égale à 20 m/s et on les laisse réagir pendant un temps de séjour à de hautes températures supérieures à 700°C qui est inférieur ou égal à 3 secondes,
à condition que le mode de réalisation suivant soit exclu :

un oxyde de titane sous forme de particules, obtenu par un procédé dans lequel on a préchauffé un gaz contenant du tétrachlorure de titane obtenu en mélangeant 4,7 Nm$^3$/h de tétrachlorure de titane gazeux et 16 Nm$^3$/h d'azote et un gaz oxydant obtenu en mélangeant 20 Nm$^3$/h d'air et 25 Nm$^3$/h de vapeur chacun à 1 100°C et 1 000°C, respectivement, et on les a ensuite introduits dans un tube de réaction à des débits de 92 m/s et 97 m/s, respectivement, via une buse d'injection en parallèle coaxiale, dans lequel la buse d'injection en parallèle coaxiale avait un diamètre de tube intérieur de 20 mm et on a introduit le gaz contenant du tétrachlorure de titane via le tube intérieur, dans lequel le tube de réaction avait un diamètre interne de 100 mm et le débit à l'intérieur du tube de réaction à une température de réaction de 1 250°C était de 13 m/s en tant que valeur calculée, et dans lequel après la réaction, on a introduit de l'air de refroidissement dans le tube de réaction de façon à ce que le temps de séjour à haute température dans le tube de réaction soit inférieur ou égal à 0,2 seconde.

2. Oxyde de titane sous forme de particules selon la revendication 1, dans lequel la surface spécifique BET représentée par B est de 40 à 200 $m^2$/g.

3. Oxyde de titane sous forme de particules selon la revendication 1 ou 2, ledit oxyde de titane ayant une constante de distribution n selon la formule de Rosin-Rammler supérieure ou égale à 1,5.

4. Procédé de production servant à produire de l'oxyde de titane sous forme de particules, comprenant un oxyde de titane sous forme de cristal mélangé contenant un cristal de rutile, dans lequel l'oxyde de titane a une propriété représentée par la formule générale suivante

$$R \geq 1\ 300 \times B^{-0,95}$$

dans laquelle R représente la teneur en rutile (%) mesurée par une méthode de diffraction des rayons X et B représente la surface spécifique BET ($m^2$/g), laquelle va de 15 à 200 $m^2$/g, le procédé comprenant de soumettre un gaz dilué de tétrachlorure de titane, obtenu en diluant du tétrachlorure de titane à une teneur supérieure ou égale à 10 % en volume et inférieure ou égale à 90 % en volume avec un gaz inerte, à une oxydation à haute température avec un gaz oxydant contenant de l'oxygène ou de la vapeur, ou les deux, dans lequel on introduit le gaz dilué de tétrachlorure de titane et le gaz oxydant, chacun préchauffé à une température supérieure ou égale à 1000°C, dans un tube de réaction chacun à une vitesse supérieure ou égale à 20 m/s et on les laisse réagir pendant un temps de séjour à de hautes températures supérieures à 700°C qui est inférieur ou égal à 3 secondes, à condition que le mode de réalisation suivant soit exclu :

on a préchauffé un gaz contenant du tétrachlorure de titane obtenu en mélangeant 4,7 $Nm^3$/h de tétrachlorure de titane gazeux et 16 $Nm^3$/h d'azote et un gaz oxydant obtenu en mélangeant 20 $Nm^3$/h d'air et 25 $Nm^3$/h de vapeur chacun à 1 100°C et 1 000°C, respectivement, et on les a ensuite introduits dans un tube de réaction à des débits de 92 m/s et 97 m/s, respectivement, via une buse d'injection en parallèle coaxiale, dans lequel la buse d'injection en parallèle coaxiale avait un diamètre de tube intérieur de 20 mm et on a introduit le gaz contenant du tétrachlorure de titane via le tube intérieur, dans lequel le tube de réaction avait un diamètre interne de 100 mm et le débit à l'intérieur du tube de réaction à une température de réaction de 1 250°C était de 13 m/s en tant que valeur calculée, et dans lequel après la réaction, on a introduit de l'air de refroidissement dans le tube de réaction de façon à ce que le temps de séjour à haute température dans le tube de réaction soit inférieur ou égal à 0,2 seconde.

5. Procédé selon la revendication 4, dans lequel on fait usage d'un gaz dilué de tétrachlorure de titane obtenu en diluant du tétrachlorure de titane à une teneur supérieure ou égale à 20 % en volume et inférieure ou égale à 80 % en volume avec un gaz inerte.

6. Procédé de production pour de l'oxyde de titane sous forme de particules selon l'une quelconque des revendications 4 ou 5, dans lequel le gaz dilué de tétrachlorure de titane et le gaz oxydant sont introduits dans le tube de réaction via une buse d'injection en parallèle coaxiale ayant un tube intérieur, le tube intérieur ayant un diamètre interne inférieur ou égal à 50 mm.

7. Procédé selon l'une quelconque des revendications 4 à 6, dans lequel le temps de séjour à de hautes températures supérieures à 700°C est inférieur ou égal à 1 seconde, de façon plus particulièrement préférable inférieur ou égal à 0,5 seconde.

Fig.1

TITANIUM
TETRACHLORIDE
(OR DILUTED
WITH NITROGEN)

2

1

OXYGEN AND STEAM

3

4

COOLING AIR

Fig.2

## REFERENCES CITED IN THE DESCRIPTION

### Patent documents cited in the description

- EP 0826633 A1
- JP 3252315 A
- JP 6340423 A
- EP 1123186 A
- DE 1667839 A
- JP 1010251021 A

### Non-patent literature cited in the description

- Ceramic Kogaku Handbook (Ceramic Engineering Handbook). 1989, 596-598